# FASCICULE DE BREVET EUROPEEN

(11) **EP 3 694 656 B1**
(45) Date de publication et mention de la délivrance du brevet: **12.01.2022**
(21) Numéro de dépôt: 18812225.3
(22) Date de dépôt: 09.10.2018
(51) Int. Cl.: B05B 11/00, B01L 3/02, G01F 11/02

(54) **DISTRIBUTEUR DE PRODUIT FLUIDE**
FLÜSSIGPRODUKTSPENDER
FLUID PRODUCT DISPENSER

(30) Priorité: 12.10.2017 CN 201710943980
(43) Date de publication de la demande: 19.08.2020
(73) Titulaire: Aptar France SAS, 27110 Le Neubourg (FR)
(72) Inventeur: SUN, Tyler, Jiangsu 215000 (CN); YE, Raul, Jiangsu 215000 (CN)
(74) Mandataire: CAPRI
(86) Numéro de dépôt international: PCT/FR2018/052490
(87) Numéro de publication internationale: WO 2019/073163

(56) Documents cités:
- WO-A1-03/103760
- WO-A1-2008/072823
- DE-A1- 3 711 236
- JP-A- H10 179 739

## Description

La présente invention concerne un distributeur de produit fluide comprenant un réservoir de produit fluide et une pompe manuelle classique définissant une chambre de pompe de volume variable entre un corps de pompe et une tige d'actionnement. Le déplacement de la tige d'actionnement a pour but de faire varier le volume de la chambre de pompe qui définit en position de repos un volume maximal prédéterminé. Ce type de distributeur est très fréquemment utilisé dans les domaines de la parfumerie, de la cosmétique ou encore de la pharmacie pour distribuer des produits fluides de viscosités diverses.

Dans l'art antérieur, on connaît déjà le document FR2978431 qui décrit un distributeur de produit fluide comprenant un réservoir de produit fluide, et une pompe comprenant un corps de pompe et une tige d'actionnement définissant entre eux une chambre de pompe ayant un volume maximal prédéterminé. La tige est déplaçable axialement dans le corps pour faire varier le volume de la chambre de pompe. Le distributeur comprend en outre une canule de distribution montée sur la tige d'actionnement et comprenant une sortie de distribution apte à former une goutte de produit fluide qui se sépare de la canule par gravité. Le volume maximal prédéterminé de la chambre de pompe est sensiblement égal au volume de la goutte de produit fluide distribuée au niveau de la tête de distribution.

La présente invention cherche notamment à optimiser ce distributeur de produit fluide de l'art antérieur, mais également d'autres, en les rendant rechargeables, de sorte que l'utilisateur peut conserver une partie du distributeur et acheter des cartouches de recharge. Un objet de la présente invention est précisément de faciliter la mise en place de ces cartouches de recharge au moyen d'une manipulation aisée, intuitive, ergonomique, et répétable, tout en garantissant une propreté parfaite (pas de perte de goutte).

Pour ce faire, la présente invention propose un distributeur de produit fluide comprenant :
- un étui pourvu d'une tête de distribution, et
- une cartouche de recharge comprenant un réservoir de produit fluide,
dans lequel la cartouche de recharge est insérable axialement dans l'étui de manière à raccorder le réservoir de produit fluide à la tête de distribution, la cartouche de recharge et l'étui étant pourvus de moyens de connexion par vissage de la cartouche de recharge dans l'étui pour amener le réservoir de produit fluide en contact étanche avec la tête de distribution, le déplacement, après vissage, de la cartouche de recharge dans l'étui vers la tête de distribution alimentant du produit fluide vers la tête de distribution. Ainsi, c'est le vissage qui permet de déplacer la cartouche de recharge pour créer une connexion étanche, avant d'actionner le distributeur. L'étanchéité peut être aussi bien axiale que radiale, voire les deux en même temps.

Avantageusement, la cartouche de recharge comprend une bague d'actionnement rotative qui est guidée en coulissement axial sur le réservoir de produit fluide, mais qui entraîne la cartouche de recharge en rotation dans l'étui pour réaliser le vissage. De préférence, la bague d'actionnement rotative est encliquetée de manière amovible sur le réservoir de produit fluide en tournant sur elle-même sur une course angulaire limitée par les moyens de connexion. En pratique, l'utilisateur saisit l'étui par sa bague d'actionnement rotative et commence par introduire le réservoir de produit fluide dans l'étui jusqu'à ce que les moyens de connexion viennent en prise mutuelle. L'utilisateur appuie alors sur la bague pour l'encliqueter sur l'étui. Ce faisant, les moyens de connexion sont dans une configuration qui va permettre à l'utilisateur d'imprimer un mouvement de rotation à la bague d'actionnement rotative, qui va entrainer avec elle le réservoir de produit fluide qui va se visser sur ou dans l'étui. Une fois l'opération de vissage terminé, l'utilisateur peut appuyer sur le réservoir pour le déplacer en direction de la tête de distribution et ainsi distribuer du produit fluide à travers la tête, sous forme de goutte, de spray, de filet ou de noisette.

Avantageusement, les moyens de connexion comprennent au moins un chemin de came formé par l'étui et au moins une broche formée par le réservoir de produit fluide, la broche étant engagée dans le chemin de came et parcourant le chemin de came lors de la rotation de la bague d'actionnement. Selon un mode de réalisation intéressant, le chemin de came peut se présenter sous la forme d'une fente qui traverse l'épaisseur de paroi de l'étui, la broche traversant la fente et comprenant une extrémité libre qui est engagée dans une rainure de guidage axial formée à l'intérieur de la bague d'actionnement rotative. De préférence, la fente comprend une ouverture d'accès par laquelle la broche pénètre dans une portion de fente axiale initiale, avant que la bague d'actionnement rotative ne s'encliquète sur l'étui, la broche, après encliquetage de la bague d'actionnement rotative sur l'étui, poursuivant ensuite son parcours dans une portion de fente inclinée à mesure que la bague d'actionnement rotative est entraînée en rotation sur l'étui, jusqu'à atteindre une portion de fente axiale finale, dans laquelle la broche peut se déplacer axialement par appui sur le réservoir de produit fluide pour distribuer du produit fluide à travers la tête de distribution.

Selon un autre aspect pratique, le réservoir de produit fluide peut comprendre un fût et un bouton poussoir fixé, avantageusement par encliquetage, au fût, le bouton poussoir formant ladite au moins une broche et une surface d'appui pour déplacer axialement la cartouche de recharge dans l'étui et ainsi distribuer du produit fluide à travers la tête de distribution. En variante, le bouton poussoir peut être intégré de manière monobloc à l'étui.

Avantageusement, le fût comprend un piston suiveur qui se déplace à mesure que du produit fluide est extrait du réservoir. Une poche souple pourrait aussi être utilisée.

Selon un mode de réalisation pratique, la cartouche de recharge peut comprendre une pompe associée au réservoir de produit fluide, la pompe étant raccordée de manière étanche à la tête de distribution par les moyens de connexion. Plus précisément, la tête de distribution peut comprendre un manchon de raccordement et la pompe comprend une tige de soupape qui est engagée dans le manchon de raccordement en créant une étanchéité radiale.

Selon une application privilégiée, la tête de distribution peut comprendre une canule de distribution apte à former une goutte de produit fluide qui se sépare de la canule par gravité.

Un des principes de l'invention réside dans le fait que la connexion étanche de la cartouche de recharge dans l'étui est opérée par un mouvement de vissage dont la composante axiale est mise à profit pour créer l'étanchéité. La mise en œuvre d'une bague d'actionnement rotative permet de faciliter l'opération de vissage, qui n'est presque plus perceptible pour l'utilisateur qui ne procède qu'à une simple rotation de la bague qui entraine avec elle le réservoir dans un mouvement de vissage (composantes rotative et axiale combinées).

La présente invention sera maintenant plus amplement décrite en référence aux dessins joints donnant à titre d'exemple non limitatif un mode de réalisation de la présente invention.

Sur les figures :
La figure 1 est une vue en section transversale verticale à travers un distributeur de produit fluide selon l'invention, et
La figure 2 est une vue agrandie de la partie haute de l'étui de la figure 1.

Le distributeur représenté sur les figures comprend deux sous-ensembles distincts, à savoir un étui E et une cartouche de recharge C. Un capot de protection 31, monté sur l'étui E, peut également être prévu.

L'étui E est une coque creuse dans laquelle est logée la cartouche de recharge C. L'étui E comprend un corps principal 15 qui est ici de forme circulaire cylindrique. D'autres formes sont possibles. Ce corps principal 15 comprend une extrémité supérieure ouverte 16 et une extrémité inférieure qui se prolonge par une tête de distributeur 11 qui forme une canule 12. L'étui E et la canule 12 sont ici réalisés de manière monobloc. La canule de distribution 12 peut être réalisée en un matériau transparent comme par exemple du verre, ou une matière plastique. La canule 12 peut présenter une symétrie de révolution parfaite autour d'un axe longitudinal X. La canule 12 s'étend d'un manchon de raccordement 13 jusqu'à une sortie de distribution 14 apte à former une goutte de produit fluide qui se sépare de la canule par gravité. Le volume des gouttes distribuées est de l'ordre de 50 à 70 microlitres. La canule de distribution 12 présente une configuration générale allongée, semblable à une pipette classique.

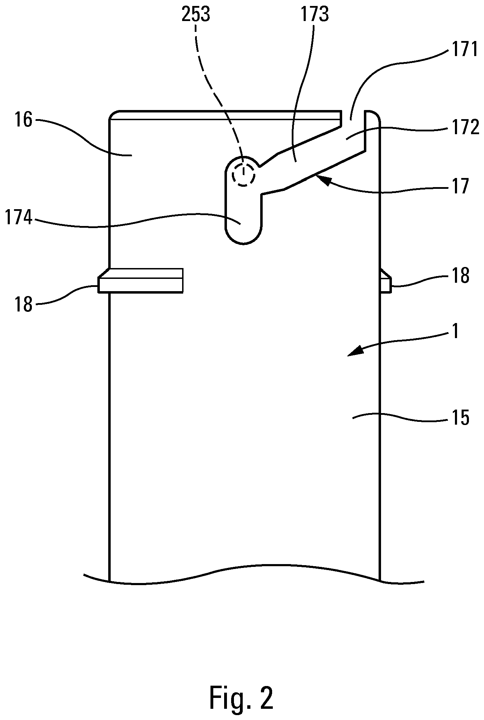

Selon l'invention, en se référant à la figure 2, on peut voir que l'extrémité supérieure ouverte 16 de l'étui E est formée avec au moins un chemin de came qui se présente sous la forme d'une fente de came 17 qui traverse l'épaisseur de paroi de l'étui. Cette fente de came 17 définit une ouverture d'accès 171 qui part du bord annulaire supérieur de l'étui, une portion de fente axiale initiale 172, une portion de fente inclinée 173 et une portion de fente axiale finale 174 de forme oblongue. En pratique, il est préférable de prévoir au moins deux fentes de came 17. Par ailleurs, l'extrémité supérieure ouverte 16 de l'étui E est formé avec au moins une nervure d'encliquetage 18, et de préférence deux, qui s'étendent par secteurs de manière périphérique en faisant saillie vers l'extérieur. Les nervures d'encliquetage 18 sont situées au niveau de la portion de fente axiale finale 174.

La cartouche de recharge C comprend un réservoir de produit fluide R, un bouton poussoir 25 et une bague d'actionnement rotative 26.

Le réservoir de produit fluide R comprend un fût de coulissement cylindrique 21 à l'intérieur duquel est monté de manière coulissante un piston suiveur 22. Il est ainsi constitué un réservoir de capacité variable, à mesure que le piston suiveur 22 se déplace à l'intérieur du fût de coulissement 21. Avec ce type de réservoir, le produit fluide contenu dans le réservoir R est toujours à l'abri de l'air extérieur, et ne peut ainsi pas se détériorer.

Le bouton poussoir 25 est disposé à l'extrémité du fût de coulissement 21, au-dessus du piston suiveur 12, lorsque le réservoir est rempli de produit fluide. Le bouton poussoir 25 forme une douille 252 qui est solidaire du fût 21, par exemple par un encliquetage définitif 211. En variante, le poussoir 2 peut être collé, soudé ou engagé en force dans le fût 21. Le bouton poussoir 25 définit une surface d'appui sur laquelle un utilisateur peut appuyer, par exemple à l'aide de son pouce. Ainsi, en appuyant sur le bouton poussoir 25, une pression est exercée sur le réservoir R, comme on le verra ci-après.

Selon l'invention, le bouton poussoir 25 forme au moins une broche 253, et de préférence deux, qui s'étendent de manière diamétralement opposées en faisant saillie vers l'extérieur à partir de la douille 252. Ces broches 253 définissent des extrémités libres 254. Les broches 253 sont destinées à être engagées dans les fentes de came 17 de l'étui E, comme on le verra ci-après.

La cartouche de recharge C comprend également une pompe 23 qui peut être considérée comme un accessoire du réservoir R. La pompe 3 comprend classiquement un corps de pompe 230 formant intérieurement une chambre de pompe 231 de capacité variable, mais définissant un volume maximal prédéterminé en position de repos. La pompe est délimitée par le corps de pompe 230, mais également par une tige d'actionnement 24 pourvue d'un piston 242. La pompe 23 est également pourvue d'un clapet d'entrée 232 et d'un clapet de tête qui peut être intégré ou solidaire de la tige d'actionnement 24. Ainsi, en appuyant sur la tige d'actionnement 24, le volume de la chambre de pompe 231 varie à partir de son volume maximal qui peut être de l'ordre de 50 à 70 microlitres. La tige d'actionnement 24 est déplaçable à partir de sa position de repos à l'encontre d'un ressort de rappel 233 qui est situé à l'extérieur de la chambre de pompe. La dose de produit fluide distribuée correspond sensiblement au volume maximal prédéterminé de la chambre de pompe. En d'autres termes, la pompe distribue à chaque actionnement sensiblement la totalité du produit fluide présent dans la chambre de pompe. Le ressort 233 ramène ainsi la chambre de pompe 231 dans sa configuration de volume maximal prédéterminé. Il s'agit là d'une conception tout à fait classique pour une pompe manuelle dans les domaines de la parfumerie, de la cosmétique ou encore de la pharmacie.

Par ailleurs, le volume interne de la canule 12 correspond environ à 3 à 7 fois, et de préférence 4 à 6 fois le volume maximal de la chambre de pompe 231, qui est de l'ordre de 50 à 70 microlitres. En d'autres termes, le volume interne de la canule est de l'ordre de 150 à 500 microlitres. De préférence, le volume interne est de l'ordre de 200 à 400 microlitres avec une préférence pour 300 microlitres. Ainsi, le contenu de la chambre de pompe 231, qui est refoulé sous pression à travers la tige d'actionnement 24, parvient dans la canule 12 qui est déjà remplie de produit fluide. Le volume considérablement plus grand de la canule par rapport à la dose distribuée permet de créer une perte de charge considérable dans la canule, ce qui permet d'éviter la distribution du produit fluide sous forme pulvérisée. Le produit fluide est donc amorti dans la canule avant de s'en détacher par gravité sous la forme d'une goutte dont la contenance est de l'ordre de 50 à 70 microlitres.

Selon l'invention, la bague d'actionnement rotative 26 de la cartouche de recharge C comprend au moins une, et de préférence deux, rainures de guidage axial 261 qui s'étendent verticalement ou axialement à l'intérieur de la bague 26. Ces rainures 261 sont ouvertes vers le haut et fermées vers le bas. Par ailleurs, la bague d'actionnement rotative 26 forme également une gorge annulaire d'encliquetage 262, qui peut s'étendre de manière continue sur toute la périphérie extérieure de l'étui, ou uniquement par secteurs, qui peuvent être intercalés avec les rainures 261.

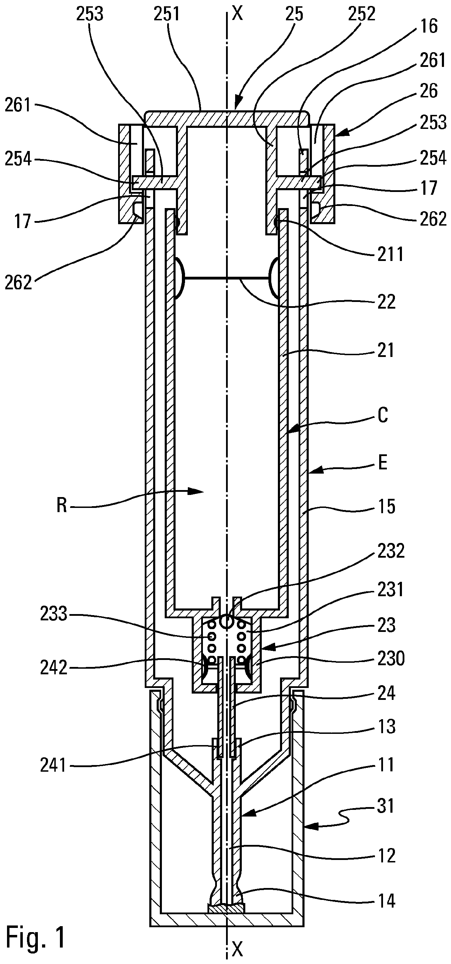

Sur la figure 1, on peut remarquer que la douille 252 du bouton poussoir 25 s'étend concentriquement à l'intérieur de l'étui E, qui s'étend lui-même concentriquement à l'intérieur de la bague d'actionnement rotative 26. Les deux broches 253 traversent les deux fentes de came 17 de l'étui, dans la position indiquée en pointillés sur la figure 2. Les extrémités libres 254 des broches 253 sont engagées dans les deux rainures de guidage axial 261 de la bague d'actionnement rotative 26, dont les gorges annulaires d'encliquetage 262 sont en prise encliquetée amovible avec les nervures d'encliquetage 18 de l'étui E. Dans cette position opérationnelle de distribution, un utilisateur peut saisir le distributeur par l'étui E dans la paume de sa main et appuyer sur le bouton poussoir 25 à l'aide de son pouce. L'actionnement est ainsi similaire ou semblable à celui d'une pipette classique. Etant donné que l'étui E masque complètement le réservoir R (et sa pompe 23), il n'a même pas conscience qu'il actionne une pompe en appuyant sur le bouton poussoir 25. Il remarque simplement qu'en appuyant sur le poussoir 25, une goutte bien formée de produit fluide tombe par gravité à partir du bout de la sortie 14 de la canule 12.

Pour parvenir à cette position opérationnelle de distribution, l'utilisateur a d'abord dû se saisir d'une main d'une cartouche de recharge C et de l'autre main de l'étui E. Les extrémités libres 254 des broches 253 sont déjà engagées dans les deux rainures de guidage axial 261 de la bague d'actionnement rotative 26, qui peut ainsi coulisser axialement autour du bouton poussoir 25. Il a ensuite inséré le réservoir R (avec sa pompe 23) dans l'étui E jusqu'à ce que les broches 253 viennent en contact avec le bord supérieur de l'étui E. Il saisit alors la cartouche de recharge C par la bague d'actionnement rotative 26 qu'il fait tourner jusqu'à ce que les broches 253 s'engagent dans les ouvertures d'accès 171 des fentes de came 17. Il ressent à ce moment un point de dureté axial qu'il peut surmonter, encliquetant ainsi la gorge annulaire d'encliquetage 262 autour des nervures d'encliquetage 18 de l'étui E. Ce faisant, les broches 253 se sont déplacées axialement pour gagner le bas de la portion de fente axiale initiale 172. A partir de cette configuration, l'utilisateur fait tourner la bague d'actionnement rotative 26 sur elle-même, ce qui force les broches 253, engagées dans les rainures de guidage axial 261, à suivre la portion de fente inclinée 173, déplaçant ainsi le réservoir et le bouton poussoir axialement en direction de la tête de distribution 11. Ce faisant, l'extrémité libre 241 de la tige de soupape 24 s'est engagée dans le manchon de raccordement 13 de la tête de distribution 11 en créant un contact étanche axial, ou de préférence radial. A la fin de la rotation de la bague d'actionnement rotative 26, les broches 253 sont situées dans la portion de fente axiale finale 174 de forme oblongue, comme représenté sur la figure 2 en traits pointillés. Le distributeur peut alors être utilisé comme décrit précédemment en appuyant sur le bouton poussoir 25 pour distribuer une goutte de produit fluide.

On comprend bien que les broches 253 et les fentes de came 17 forment ensemble des moyens de connexion par vissage, qui permettent de raccorder de manière étanche la cartouche de recharge à la tête de distribution 11 de l'étui E. La bague d'actionnement rotative 26 vient astucieusement compléter ces moyens de connexion par vissage en améliorant la préhension de la cartouche de recharge C, en facilitant l'orientation angulaire de la cartouche de recharge C par rapport à l'étui E pour trouver l'ouverture d'accès 171, en venant s'encliqueter de manière amovible mais rotative sur l'étui E, en transformant le mouvement de vissage (axial/rotatif) en un mouvement purement rotatif et en masquant ou habillant le bouton poussoir 25. Ces fonctions sont toutes mises en œuvre dans le mode de réalisation qui a servi à illustrer la présente invention, mais il est évident que la bague d'actionnement rotative 26 pourrait ne remplir qu'une partir des fonctions listées ci-dessus.

Sans sortir du cadre de l'invention, la pompe peut aussi faire partie intégrante de l'étui et la tête de distribution 11 peut être exempte de canule de distribution 12 telle que décrite ci-dessus. La tête de distribution 11 pourrait intégrer un gicleur pour former un spray ou encore être pourvue d'un applicateur.

## Revendications

1. Distributeur de produit fluide comprenant :
- un étui (E) pourvu d'une tête de distribution (11), et
- une cartouche de recharge (C) comprenant un réservoir de produit fluide (R),
dans lequel la cartouche de recharge (C) est insérable axialement dans l'étui (E) de manière à raccorder le réservoir de produit fluide (R) à la tête de distribution (11),
**caractérisé en ce que** la cartouche de recharge (C) et l'étui (E) sont pourvus de moyens de connexion (17, 253) par vissage de la cartouche de recharge (C) dans l'étui (E) pour amener le réservoir de produit fluide (R) en contact étanche avec la tête de distribution (11), le déplacement, après vissage, de la cartouche de recharge (C) dans l'étui (E) vers la tête de distribution (11) alimentant du produit fluide vers la tête de distribution (11).

2. Distributeur selon la revendication 1, dans lequel la cartouche de recharge (C) comprend une bague d'actionnement rotative (26) qui est guidée en coulissement axial sur le réservoir de produit fluide (R), mais qui entraîne la cartouche de recharge (C) en rotation dans l'étui (E) pour réaliser le vissage.

3. Distributeur selon la revendication 2, dans lequel la bague d'actionnement rotative (26) est encliquetée de manière amovible sur le réservoir de produit fluide (R) en tournant sur elle-même sur une course angulaire limitée par les moyens de connexion (17, 253).

4. Distributeur selon la revendication 2 ou 3,
dans lequel les moyens de connexion comprennent au moins un chemin de came (17) formé par l'étui (E) et au moins une broche (253) formée par le réservoir de produit fluide (R), la broche (253) étant engagée dans le chemin de came (17) et parcourant le chemin de came (17) lors de la rotation de la bague d'actionnement rotative (26).

5. Distributeur selon la revendication 4, dans lequel le chemin de came se présente sous la forme d'une fente de came (17) qui traverse l'épaisseur de paroi de l'étui (E), la broche (253) traversant la fente de came (17) et comprenant une extrémité libre (254) qui est engagée dans une rainure de guidage axial (261) formée à l'intérieur de la bague d'actionnement rotative (26).

6. Distributeur selon la revendication 5, dans lequel la fente de came (17) comprend une ouverture d'accès (171) par laquelle la broche (253) pénètre dans une portion de fente axiale initiale (172), avant que la bague d'actionnement rotative (26) ne s'encliquète sur l'étui (E), la broche (253), après encliquetage de la bague d'actionnement rotative (26) sur l'étui (E), poursuivant ensuite son parcours dans une portion de fente inclinée (173) à mesure que la bague d'actionnement rotative (26) est entraînée en rotation sur l'étui (E), jusqu'à atteindre une portion de fente axiale finale (174), dans laquelle la broche (253) peut se déplacer axialement par appui sur le réservoir de produit fluide (R) pour distribuer du produit fluide à travers la tête de distribution (11).

7. Distributeur selon l'une des revendications 4 - 6,
dans lequel le réservoir de produit fluide (R) comprend un fût (21) et un bouton poussoir (25) fixé, avantageusement par encliquetage, au fût (21), le bouton poussoir (25) formant ladite au moins une broche (253) et une surface d'appui (251) pour déplacer axialement la cartouche de recharge (C) dans l'étui (E) et ainsi distribuer du produit fluide à travers la tête de distribution (11).

8. Distributeur selon la revendication 7,
dans lequel le fût (21) comprend un piston suiveur (22) qui se déplace à mesure que du produit fluide est extrait du réservoir de produit fluide (R).

9. Distributeur selon l'une quelconque des revendications précédentes, dans lequel la cartouche de recharge (C) comprend une pompe (23) associée au réservoir de produit fluide (R), la pompe (23) étant raccordée de manière étanche à la tête de distribution (11) par les moyens de connexion (17, 253).

10. Distributeur selon la revendication 9, dans lequel la tête de distribution (11) comprend un manchon de raccordement (13) et la pompe (23) comprend une tige de soupape (24) qui est engagée dans le manchon de raccordement (13) en créant une étanchéité radiale.

11. Distributeur selon l'une quelconque des revendications précédentes, dans lequel la tête de distribution (11) comprend une canule de distribution (12) apte à former une goutte de produit fluide qui se sépare de la canule de distribution (12) par gravité.

## Patentansprüche

1. Flüssigproduktspender, umfassend:
Ein Gehäuse (E), das mit einem Abgabekopf (11) versehen ist, und
eine Nachfüllkartusche (C), die einen Flüssigproduktvorratsbehälter (R) umfasst,
wobei die Nachfüllkartusche (C) axial in das Gehäuse (E) derart einführbar ist, dass der Flüssigproduktvorratsbehälter (R) dabei mit dem Abgabekopf (11) verbunden wird,
**dadurch gekennzeichnet, dass** die Nachfüllkartusche (C) und das Gehäuse (E) mit Mitteln (17, 253) zur Verbindung durch Einschrauben der Nachfüllkartusche (C) in das Gehäuse (E) versehen sind, um den Flüssigproduktvorratsbehälter (R) in abgedichteten Kontakt mit dem Abgabekopf (11) zu bringen, wobei nach dem Einschrauben der Nachfüllkartusche (C) deren Verschiebung im Gehäuse (E) in Richtung des Abgabekopfes (11) die Zuführung des Flüssigprodukts an den Abgabekopf (11) bewirkt.

2. Spender nach Anspruch 1, bei dem die Nachfüllkartusche (C) einen drehbaren Betätigungsring (26) aufweist, der auf dem Flüssigkeitsvorratsbehälter (R) axial verschiebbar geführt ist, wobei er jedoch die Nachfüllkartusche (C) im Gehäuse (E) in Drehung versetzt, um die Verschraubung zu bewirken.

3. Spender nach Anspruch 2, bei dem der drehbare Betätigungsring (26) durch Drehung über einen durch die Verbindungsmittel (17, 253) begrenzten Winkelweg lösbar an dem Flüssigkeitsvorratsbehälter (R) eingerastet wird.

4. Spender nach einem der Ansprüche 2 bis 3, bei dem die Verbindungsmittel mindestens eine von dem Gehäuse (E) gebildete Nockenbahn (17) und mindestens einen von dem Flüssigkeitsvorratsbehälter (R) gebildeten Stift (253) umfassen, wobei der Stift (253) in die Nockenbahn (17) eingreift und die Nockenbahn (17) bei Drehung des drehbaren Betätigungsrings (26) durchläuft.

5. Spender nach Anspruch 4, bei dem die Nockenbahn als Nockenschlitz (17) ausgebildet ist, der durch die Wandstärke des Gehäuses (E) hindurch verläuft, wobei der Stift (253) durch den Nockenschlitz (17) hindurch verläuft und ein freies Ende (254) aufweist, das in eine im Inneren des drehbaren Betätigungsrings (26) ausgebildete axiale Führungsnut (261) eingreift.

6. Spender nach Anspruch 5, bei dem der Nockenschlitz (17) eine Zugangsöffnung (171) aufweist, durch die der Stift (253) in einen axialen Anfangsabschnitt (172) des Schlitzes eintritt, bevor der drehbare Betätigungsring (26) am Gehäuse (E) einrastet, wobei der Stift (253) nach dem Einrasten des drehbaren Betätigungsrings (26) am Gehäuse (E) dann seine Bewegung in einem geneigten Schlitzabschnitt (173) in dem Maße fortsetzt, wie der drehbare Betätigungsring (26) am Gehäuse (E) gedreht wird, bis der Stift (253) einen axialen Endabschnitt (174) des Schlitzes erreicht, in dem sich der Stift (253) axial bewegen kann, indem er auf den Flüssigproduktvorratsbehälter (R) drückt, wodurch Flüssigprodukt über den Spenderkopf (11) abgegeben wird.

7. Spender nach einem der Ansprüche 4 bis 6, bei dem der Flüssigproduktvorratsbehälter (R) einen Zylinder (21) und einen Druckknopf (25) umfasst, der vorzugsweise durch Einrasten an dem Zylinder (21) befestigt ist, wobei der Druckknopf (25) den mindestens einen Stift (253) und eine Anlagefläche (251) bildet zum axialen Verschieben der Nachfüllkartusche (C) im Gehäuse (E) und somit zur Abgabe von Flüssigprodukt über den Spenderkopf (11).

8. Spender nach Anspruch 7, bei dem der Zylinder (21) einen Folgekolben (22) umfasst, der sich in dem Maße bewegt, wie Flüssigprodukt aus dem Flüssigproduktvorratsbehälter (R) entnommen wird.

9. Spender nach einem der vorhergehenden Ansprüche, bei dem die Nachfüllkartusche (C) eine Pumpe (23) umfasst, die mit dem Flüssigproduktvorratsbehälter (R) verbunden ist, wobei die Pumpe (23) durch die Verbindungsmittel (17, 253) abdichtend mit dem Abgabekopf (11) verbunden ist.

10. Spender nach Anspruch 9, bei dem der Abgabekopf (11) eine Verbindungshülse (13) aufweist und die Pumpe (23) einen Ventilschaft (24) aufweist, der in die Verbindungshülse (13) eingreift und dabei eine radiale Dichtung bildet.

11. Spender nach einem der vorhergehenden Ansprüche, bei dem der Abgabekopf (11) eine Abgabekanüle (12) umfasst, die geeignet ist, einen Tropfen eines Flüssigprodukts zu bilden, der sich dann unter Schwerkrafteinwirkung von der Abgabekanüle (12) löst.

## Claims

1. A fluid dispenser comprising:
• a casing (E) that is provided with a dispenser head (11), and
• a refill cartridge (C) that includes a fluid reservoir (R),
wherein the refill cartridge (C) is axially insertable into the casing (E) in such a manner as to connect the fluid reservoir (R) to the dispenser head (11),
the fluid dispenser being **characterized in that** the refill cartridge (C) and the casing (E) are provided with connection means (17, 253) for connecting the refill cartridge (C) in the casing (E) by screw-fastening, so as to bring the fluid reservoir (R) into leaktight contact with the dispenser head (11), the movement, after screw-fastening, of the refill cartridge (C) in the casing (E) towards the dispenser head (11) delivering the fluid to the dispenser head (11).

2. A dispenser according to claim 1, wherein the refill cartridge (C) includes a rotary actuator ring (26) that is guided in axial sliding over the fluid reservoir (R), but that turns the refill cartridge (C) in the casing (E) so as to perform screw-fastening.

3. A dispenser according to claim 2, wherein the rotary actuator ring (26) is snap-fastened in removable manner on the fluid reservoir (R), turning about its own axis over an angular stroke that is limited by the connection means (17, 253).

4. A dispenser according to claim 2 or 3, wherein the connection means comprise at least one cam path (17) that is formed by the casing (E), and at least one pin (253) that is formed by the fluid reservoir (R), the pin (253) being engaged in the cam path (17) and following the cam path (17) while turning the rotary actuator ring (26).

5. A dispenser according to claim 4, wherein the cam path is in the form of a cam slot (17) that passes through the wall thickness of the casing (E), the pin (253) passing through the cam slot (17) and including a free end (254) that is engaged in an axial guide groove (261) that is formed inside the rotary actuator ring (26).

6. A dispenser according to claim 5, wherein the cam slot (17) includes an access opening (171) via which the pin (253) penetrates into an initial axial slot portion (172), before the rotary actuator ring (26) snap-fastens on the casing (E), the pin (253), after snap-fastening the rotary actuator ring (26) on the casing (E), then following its path into a sloping slot portion (173) as the rotary actuator ring (26) turns on the casing (E), until it reaches a final axial slot portion (174), in which the pin (253) can move axially by pressing on the fluid reservoir (R) so as to dispense fluid through the dispenser head (11).

7. A dispenser according to one of the claim 4-6, wherein the fluid reservoir (R) includes a cylinder (21) and a pushbutton (25) that is fastened to the cylinder (21), advantageously by snap-fastening, the pushbutton (25) forming said at least one pin (253) and a bearing surface (251) so as to move the refill cartridge (C) axially in the casing (E) and thus dispense fluid through the dispenser head (11).

8. A dispenser according to claim 7, wherein the cylinder (21) includes a follower piston (22) that moves as the fluid is removed from the fluid reservoir (R).

9. A dispenser according to any preceding claim, wherein the refill cartridge (C) includes a pump (23) that is associated with the fluid reservoir (R), the pump (23) being connected in leaktight manner to the dispenser head (11) via the connection means (17, 253).

10. A dispenser according to claim 9, wherein the dispenser head (11) includes a connection sleeve (13), and the pump (23) includes a valve rod (24) that is engaged in the connection sleeve (13) thereby establishing radial sealing.

11. A dispenser according to any preceding claim, wherein the dispenser head (11) includes a dispenser cannula (12) that is suitable for forming a drop of fluid that separates from the dispenser cannula (12) by gravity.
